# EUROPEAN PATENT APPLICATION

(11) **EP 2 546 084 A1**
(43) Date of publication of application: **16.01.2013**
(21) Application number: 11173531.2
(22) Date of filing: 12.07.2011
(51) Int. Cl.: B60H 1/32, F25D 11/00, F25D 17/04

(54) **Humidity control in a refrigerated transport container with an intermittently operated compressor**

(71) Applicant: A.P. Møller - Mærsk A/S, 1263 Copenhagen K (DK)
(72) Inventor: Lukasse, Leijn Johannes Sjerp, 6717MS Ede (NL); De Kramer-Cuppen , Janneke Emmy, 6721HK Bennekom (NL)
(74) Representative: Zacco Denmark A/S

(57) **Abstract**

There is a growing need for dehumidification control in refrigerated transport containers with an intermittently operated compressor. The disclosed system and method of dehumidification control, controlling the speed of one or more evaporator fans and a heating unit, meets that need using one or more dehumidification need indicators and one or more condensation indicators.

More specifically a system for and method is disclosed, comprising: controlling the operation of the one or more evaporator fans (10) for dehumidification purposes according to: if a need for dehumidification is determined using at least one dehumidification need indicator and if at least one condensation indicator indicates that the evaporator (16) is sufficiently cold respectively too warm for condensation or deposition of water vapour on its external surface, then setting or maintaining the speed of the one or more evaporator fans (10) to a reduced speed (LOW) in order to increase a condensation or deposition rate respectively to an increased speed (HIGH) in order to increase heat load to the evaporator (16), respectively.

In other embodiments the system and method controls the heating unit as well.

## Description

The present invention relates to a method of and a system for dehumidification control in a refrigerated transport container thereby controlling relative humidity within a refrigerated storage space with an intermittently operated compressor.

### BACKGROUND OF THE INVENTION

Temperature in a refrigerated storage space is controlled within a temperature range adjacent to a setpoint or target temperature. The refrigerated storage space may for example comprise a transport volume of a refrigerated transport container. The setpoint temperature is chosen to keep perishable produce such as meat, vegetables and fruit or other, at correct temperatures to avoid quality degradation.

In many shipments of perishable goods, not only should the temperature be controlled, but the humidity should be decreased as well to protect the carried commodity from mould growth and/or condensation. Humidity in a refrigerated storage space is then controlled within a humidity range adjacent to a setpoint or target absolute or relative humidity. Many refrigerated transport containers are equipped to both control temperature and decrease humidity.

Decreasing humidity typically requires reducing the lowest dry-bulb temperature of air on its way through the cooling unit further below its dewpoint temperature. This will increase the rate of condensation or deposition of water vapour at this coldest location. This coldest location typically is the evaporator's external surface or a part of that. There are normally two condensation or deposition rate increasing factors: 1) lowering the coldest temperature of refrigerant inside the evaporator and 2) reducing the air flow rate over the cold evaporator in order to increase the residence time of air on the evaporator surface in order to allow the air temperature to come closer to the refrigerant temperature.

One way of lowering the coldest temperature inside the evaporator is to increase the heat load of the evaporator, because simultaneously the temperature controller will then reduce the temperature of the refrigerant inside the evaporator, with the aim not to disturb the supply air temperature. The joint effect is reducing the temperature of air leaving the evaporator without increasing the supply air temperature. Increasing the heat load of the evaporator may be done by turning on a heating unit (situated downstream of the evaporator).

Another way, may be to decrease the heat absorbing area of the evaporator e.g. by physically shutting off a part of the evaporator or by increasing the so-called superheat.

The above two condensation or deposition rate increasing factors are traditional approaches to increase the dehumidification capacity. See for example patent specifications US 4,003,729, US 4,182,133 and patent application publication US 2011/0041539 A1.

In refrigerated transport containers with a continuously running compressor, a common way of decreasing humidity is 1) to increase the heat supplied by the heating unit, and 2) to reduce the air flow over the evaporator by reducing the evaporator fan speed to a relatively low speed.

However, using an intermittently operated compressor as opposed to using a continuously running compressor in order to save energy presents a new situation for dehumidification control. An intermittently operated compressor may switch between a first active state, e.g. ON, MAX or near MAX, and a second less active state, e.g. LOW, near OFF or OFF. The two factors of increasing condensation or deposition rate of water vapour described above are not working so straightforwardly in relation to an intermittently operated compressor. As one example, for dehumidification purposes it has been found that the decrease of the fan speed should only be done when there is a need to dehumidify and the temperature of the external area of the evaporator is below the dewpoint temperature. For a continuously running compressor, the temperature of the external area of the evaporator will be below the dewpoint temperature most of the time, but for an intermittently operated compressor that is usually only the case when the compressor is in the first active state.

A further issue is how to indicate a need for dehumidification when using an intermittently operated compressor as an intermittently operated compressor naturally will introduce minor temperature variations where the temperature variations will cause variations in relative humidity. So simply the difference between current relative humidity and a relative humidity setpoint, an otherwise classical and reliable dehumidification need indicator in systems with a continuously running compressor, is no longer an optimal dehumidification need indicator in systems with an intermittently operated compressor.

### SUMMARY

Generally, the disclosed humidity controller controls dehumidification in refrigerated transport containers with an intermittently operated compressor by manipulating the speed of evaporator fans and possibly the state of a heating unit situated downstream of the evaporator. The controller uses dehumidification need indicators and condensation indicators. Dehumidification need indicators are indicators indicating whether it is desirable to reduce relative humidity. An example of a classically used dehumidification need indicator is the difference between current relative humidity and a relative humidity setpoint. Condensation indicators are used advantageously to determine if the evaporator surface or a part of it is sufficiently cold to increase the rate of water vapour condensation or deposition on the evaporator's external surface by reducing the evaporator fans speed.

A first aspect relates to a method of dehumidification in a refrigerated transport container, the refrigerated transport container comprising at least one heating unit, a transport volume, a cooling unit, and a control unit, wherein the cooling unit comprises at least a compressor and an evaporator comprising one or more evaporator fans, the heating unit is situated downstream of the evaporator, where the compressor is intermittently operated between a first active state (e.g. ON, MAX, or near MAX) and a second less active state (e.g. OFF, near OFF, or MIN), wherein the method comprises: controlling the operation of the one or more evaporator fans for dehumidification purposes according to
o if a need for dehumidification is determined using at least one dehumidification need indicator and if at least one condensation indicator indicates that the evaporator is sufficiently cold for condensation or deposition of water vapour on its external surface, then setting or maintaining the speed of the one or more evaporator fans to a reduced speed (LOW) in order to increase a condensation or deposition rate, and/or
o if a need for dehumidification is determined using at least one dehumidification need indicator and if at least one condensation indicator indicates that the evaporator is too warm for condensation or deposition of water vapour on its external surface, then setting or maintaining the speed of the one or more evaporator fans to an increased speed (HIGH) in order to increase heat load to the evaporator.

Intermittent compressor operation is energetically attractive because it may avoid operation in inefficient part-load conditions. An advantage of the current dehumidification method is that it offers a possibility to combine dehumidification, i.e. operation at a purposely increased condensation or deposition rate, with intermittent compressor operation. Reducing the fan speed if at least one condensation indicator indicates that the evaporator is sufficiently cold for condensation or deposition of water vapour on its external surface instantaneously increases the condensation or deposition rate. Increasing the fan speed if at least one condensation indicator indicates that the evaporator is too warm for condensation or deposition of water vapour on its external surface has multiple positive effects. Namely:
- increased heat load to the container will shorten the duration of periods where the compressor is in the less active state, and hence the periods where the evaporator is too warm for condensation or deposition of water vapour on its external surface. Doing so, advances the time the condensation or deposition rate can be increased again.
- Dehumidification is typically applied to protect the shipped produce from mould growth. There are two factors contributing to reducing mould growth: reduce relative humidity (i.e. dehumidify) and increase air flow. This fan speed increase contributes to both anti-mould factors.
- As a welcome side-effect it improves the mixing of air thus reducing temperature distribution in the transport volume.

In one embodiment, the at least one dehumidification need indicator is one or more selected from the group of:
- a difference between current or recent relative humidity (RH) and relative humidity setpoint (RHset), or a function thereof,
- a time elapsed since a most recent start of operating in dehumidification mode, and
- that the evaporator fans (10) were operating at a reduced speed (LOW) the last time the compressor (6) was in the first active state (this signifies that a last non-circulation mode was a dehumidification mode).

By dehumidification mode is to be understood an operation mode in which the compressor is in the first active state, heating unit is on, and evaporator fans speed is low. This mode on purposely increases the rate of condensation or deposition in order to reduce relative humidity.

By non-circulation mode is to be understood an operation mode in which at least either the compressor is in the first active state or the heating unit is on.

Using dehumidification need indicators helps tailoring the amount of condensation or deposition to the need. Dehumidification is a very energy-consuming process. The dehumidification need indicators are used to stop the dehumidification process when the need has been met, while resuming dehumidification when necessary.

In one embodiment, the at least one condensation indicator is one or more selected from the group of:
- that the compressor is in the first active state,
- that a supply air temperature is colder than a return air temperature e.g. plus an offset, where the offset may be zero,
- that the supply air temperature is colder than a setpoint temperature e.g. plus an offset that may be zero,
- a measured temperature of at least a part of an external surface of the evaporator is below dewpoint, and
- a function of a boiling temperature of the refrigerant inside the evaporator is below dewpoint (the boiling temperature may readily be derived from pressure measurements and knowledge of the known refrigerant properties).

Some of these condensation indicators are standard available in the controller of the cooling unit. They can be used advantageously to predict if reducing the evaporator fans speed actually increases the rate of water vapour condensation or deposition on the evaporator's external surface.

In one embodiment, the method comprises the step of
- controlling the operation of the one or more evaporator fans for dehumidification purposes by setting or maintaining the speed of the one or more evaporator fans to be a reduced speed (LOW) thereby increasing condensation or deposition if:
   o the compressor is in the second less active state, the evaporator fans were operating at a reduced speed (LOW) the last time the compressor was in the first active state, and a supply air temperature is colder than a return air temperature, and/or,
   o the compressor is in the first active state and the difference between current relative humidity (RH) and relative humidity setpoint (RHset) is determined to be above a second predetermined dehumidification need threshold (RHlim2), and/or
   o the compressor is in the first active state, a time elapsed since a most recent start of operating in dehumidification mode is less than a predetermined period of time.

In the above embodiment the situation described in the first bullet increases the condensation or deposition rate for dehumidification if there is a need to dehumidify, by exploiting a cold evaporator when the compressor is in the second less active state. This condition typically applies during the minutes just after the compressor transitioned from the first active state to the second less active state. The second situation increases the condensation or deposition rate for dehumidification if there is a need to dehumidify, by exploiting a cold evaporator due to the compressor operating in the first active state. The third situation increases the condensation or deposition rate for dehumidification if relative humidity was too high less than a predetermined period of time ago. This makes the dehumidification method robust to variations in relative humidity that will occur naturally due to the temperature variations induced by the intermittently operated compressor.

In one embodiment, the method comprises the step of
- controlling the operation of the one or more evaporator fans for dehumidification purposes by setting or maintaining the speed of the one or more evaporator fans to be an increased speed (HIGH) thereby increasing heat load to the evaporator if:
   o the compressor is in the second less active state and if the difference between current relative humidity (RH) and relative humidity setpoint (RHset) is above a first predetermined dehumidification need threshold (RHlim1) and if at least one condensation indicator indicates that the evaporator is too warm for condensation or deposition of water vapour on its external surface.

Increasing evaporator fans speed if there is a need to dehumidify while no possibility to instantaneously increase the rate of condensation or deposition has multiple advantages, as mentioned before.

In one embodiment, the method comprises controlling the operation of the heating unit for dehumidification purposes by activating the heating unit thereby increasing heat load to the evaporator when a need for dehumidification is determined using at least one dehumidification need indicator.

The advantage of activating the heating unit is that it increases the heat load to the evaporator, which in turn forces the temperature controller to increase the percentage of time the compressor operates in the first active state in order to properly maintain temperature. The increased percentage of time the compressor operates in the first active state increases the percentage of time the evaporator is sufficiently cold to increase the condensation or deposition rate.

In one embodiment, the heating unit is activated if:
- the compressor is in the first active state and the difference between current relative humidity (RH) and relative humidity setpoint (RHset) is determined to be above the second predetermined dehumidification need threshold (RHlim2), and/or
- the compressor is in the first active state, and a time elapsed since a most recent start of operating in dehumidification mode is less than a predetermined period of time, and/or
- the compressor is in the second less active state, the heating unit was active at the end of a last period the compressor was in the first active state (signifying that the last non-circulation mode was a dehumidification mode) and the difference between current relative humidity (RH) and relative humidity setpoint (RHset) is determined to be above the second predetermined dehumidification need threshold (RHlim2), and/or
- the compressor is in the second less active state, and the difference between current relative humidity (RH) and relative humidity setpoint (RHset) is determined to be above a third predetermined dehumidification need threshold (RHlim3).

This is one advantageous implementation where multiple dehumidification need indicators, and combinations of those, are used to decide on activating the heating unit. The first situation activates the heating unit when the compressor is in the first active state (a condensation indicator) and the difference between measured relative humidity (RH) and its setpoint (RHset), one of the dehumidification need indicators, is above a predetermined threshold value (RHlim2). The second situation activates the heating unit while the compressor is in the first active state (a condensation indicator), regardless of actual relative humidity, just because relative humidity was too high less than a predetermined period of time ago (also a dehumidification need indicator).

This makes the method robust to variations in relative humidity that will occur naturally due to the temperature variations induced by the intermittently operated compressor. The third situation activates the heating unit while the compressor is in the second less active state because two indicators indicate a need for dehumidification: at the end of the latest period the compressor was in the first active state there still was a need to dehumidify, and also now the difference between measured relative humidity (RH) and its setpoint (RHset), one of the dehumidification need indicators, is above a predetermined threshold value (RHlim2). The fourth situation activates the heating unit while the compressor is in the second less active state, regardless of past conditions, if relative humidity is far too high. This is implemented by evaluating if the difference between measured relative humidity (RH) and its setpoint (RHset), one of the dehumidification need indicators, is above a predetermined threshold value (RHlim3).

In one embodiment, the first predetermined dehumidification need threshold (RHlim1) is lower than or equal to the second predetermined dehumidification need threshold (RHlim2).

An advantage of RHlim1 < RHlim2 is that in this way it is ensured that at the slightest need for dehumidification (RH > RHlim1) then the first action will be to increase the speed of the evaporator fans, with the multiple advantageous effects as mentioned before. Only if the dehumidification need grows (RH > RHlim2) the control will call upon the actions of fan speed reduction and activating the heating unit.

In one embodiment, the second predetermined dehumidification need threshold (RHlim2) is lower than or equal to the third predetermined dehumidification need threshold (RHlim3).

An advantage of RHlim2 < RHlim3 is that only when relative humidity is far too high (RH>RHlim3) as a last option the control calls upon the least energy-efficient step of activating the heating unit while the compressor is in the second less active state.

In one embodiment, the state of heating unit, compressor and evaporator fans may only change if one or more minimum duration times for being in a given state for the heating unit and/or the compressor and/or the evaporator fans have elapsed.

The primary reason for introducing these minimum durations is to avoid overly frequent state changes as a means to protect unit hardware, including compressor lubrication and contactor wear.

In one embodiment, the method is only performed if the temperature is within specification by a predetermined margin.

The advantage of the above precondition is that it ensures that temperature control prevails over humidity control. In refrigerated transport and storage proper temperature control is always the first priority.

In one embodiment, the refrigerated transport container is not a transport container but another type of refrigerated space in connection with a refrigeration unit. This could e.g. be an item of refrigerated road transport equipment, a reefer ship, or any type of stationary cold storage room.

A second aspect relates to a system for dehumidification in a refrigerated transport container, the refrigerated transport container comprising at least one heating unit, a transport volume, and a cooling unit, a control unit, wherein the cooling unit comprises at least a compressor and an evaporator comprising one or more evaporator fans, the heating unit is situated downstream of the evaporator, where the compressor is intermittently operated between a first active state and a second less active state, wherein the system comprises a processing unit adapted to:
- control the operation of the one or more evaporator fans for dehumidification purposes according to
   o if a need for dehumidification is determined using at least one dehumidification need indicator and if at least one condensation indicator indicates that the evaporator is sufficiently cold for condensation or deposition of water vapour on its external surface, then setting or maintaining the speed of the one or more evaporator fans to a reduced speed (LOW) in order to increase a condensation or deposition rate, and/or
   o if a need for dehumidification is determined using at least one dehumidification need indicator and if at least one condensation indicator indicates that the evaporator is too warm for condensation or deposition of water vapour on its external surface, then setting or maintaining the speed of the one or more evaporator fans to an increased speed (HIGH) in order to increase heat load to the evaporator.

The embodiments of the system correspond to the embodiments of the method and have the same advantages for the same reasons.

### BRIEF DESCRIPTION OF THE DRAWINGS

Preferred embodiments of the invention will be described in more detail in connection with the appended drawings, in which:
Figure 1 schematically illustrates a simplified longitudinal cross-sectional view of a refrigerated space in the form of a refrigerated transport container;
Figure 2 illustrates a so-called Mollier diagram for humid air with a dehumidification cycle illustrated (1 -> 2 -> 3);
Figure 3 is a state diagram illustrating respective operational modes of a compressor, a heating unit and one or more evaporator fans as a function of a temperature error integral (TEI);
Figures 4 and 5 are a flow chart illustrating steps executed by a microprocessor-implemented dehumidification control algorithm or program of a control system of a refrigerated transport container,

### DESCRIPTION OF PREFERRED EMBODIMENTS

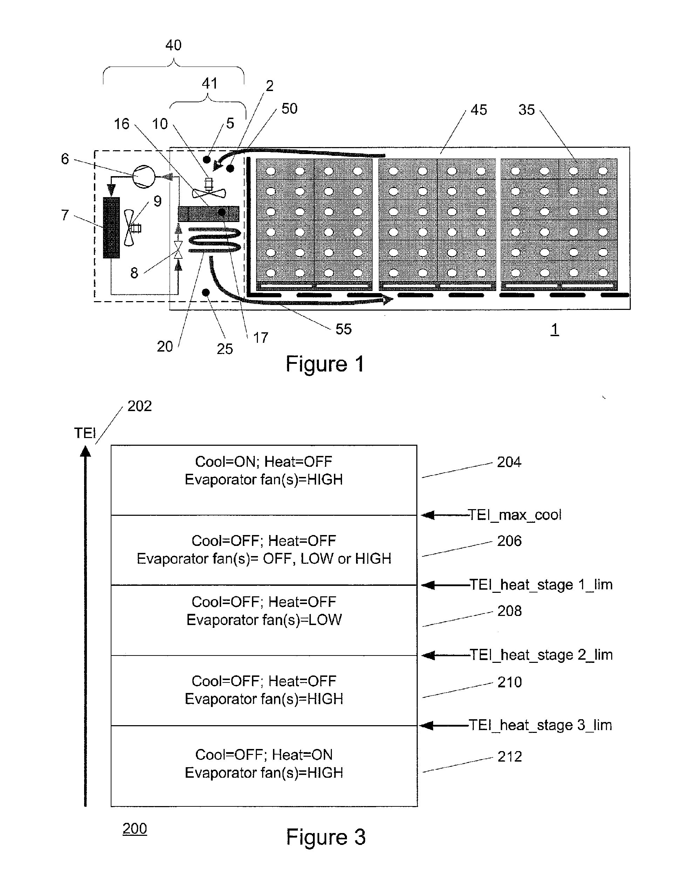

Figure 1 schematically illustrates a simplified longitudinal cross-sectional view of a refrigerated space in the form of a refrigerated transport container. Shown in Figure 1 is one example of a refrigerated transport container 1 comprising a frontal section having a cooling unit or system 40 and a load/cargo section or transport volume 45. The transport volume 45 of the refrigerated transport container 1 comprises a commodity load e.g. comprising a plurality of stackable transport cartons or crates 35 arranged within the transport volume 45 such as to leave appropriate clearance at a ceiling and a floor structure for air flow passages above and beneath the commodity load.

The cooling unit 40 in this example comprises a so-called vapour compression refrigeration circuit and a cooling space 41. The refrigeration circuit at least comprises a compressor 6, a condenser 7 with one or more condenser fans 9, an expansion device 8 and an evaporator 16 with one or more evaporator fans 10. The compressor 6 and the condenser 7 with the one or more condenser fans 9 are situated outside the insulated enclosure of the transport container 1.

The cooling space 41 is situated inside the insulated enclosure of the transport container 1. The cooling space 41 may (as shown) be separated from the transport volume 45 by a panel equipped with one or more openings to allow a return air flow 50 into the cooling space 41 and a supply air flow 55 out of the cooling space 41. The air flow through the cooling space is maintained by one or more evaporator fans 10. On its way through the cooling space 41, air successively passes the one or more evaporator fans 10, the evaporator 16, and a heating unit 20. The cooling space 41 may also comprise a relative humidity sensor 2, usually situated upstream of the one or more evaporator fans 10, and at least a return air temperature sensor 5 and/or a supply air temperature sensor 25, and may further comprise a defrost termination temperature sensor or the like 17 measuring the evaporator surface temperature.

Other typical cooling units or refrigeration units used in refrigerated transport containers may be different.

A control system (not illustrated) comprises one or more programmed microprocessors, which controls respective operational states of the variable speed evaporator fans 10, the heating unit 20, and the compressor 6 in accordance with a control algorithm defined by a set of microprocessor program instructions. The control system may additionally comprise a user interface, for example a LCD display, where an operator or ship technician can enter or modify certain parameter values of the control algorithm such as a setpoint temperature of the refrigerated transport container 1, etc.

The one or more evaporator fans 10 may be configured to operate at a number of discrete preset speed settings and may have a given speed setting selected from the group of: a first (referred to as HIGH throughout the specification) speed setting with a predetermined first speed, a second (referred to as LOW throughout the specification) speed setting with a predetermined second speed, and a third (referred to as OFF throughout the specification) speed setting with a predetermined third speed, where the first speed is greater than the second speed and the second speed is greater than the third speed.

In one embodiment, a predefined speed ratio between the HIGH and LOW speed setting is a ratio of at least about 1.5 and may be 2 or 3 or more.

The OFF, LOW and HIGH speed settings may for example correspond to air flow rates of about 0, about 3000 and about 6000 m³ per hour, respectively, but may depend on the specific refrigerated transport container and/or refrigeration unit or system used.

Throughout the present specification, each of the discussed fan speed settings of the evaporator fan or fans may be provided by joined operation of all or some of the evaporator fans present in the refrigerated transport container. Different fan speed settings may be achieved by changing the actual speed of one or several individual evaporator fan(s) or by turning a certain number of fans ON or OFF.

In the present specification, the first active state of the intermittently operated compressor 6 means it operates at more than 10%, preferably more than 90%, of its maximum capacity. In the second less active state of the intermittently operated compressor 6 it operates at less than 10%, preferably at or about 0%, of its maximum capacity. An intermittently operated compressor 6 may reside in the second less active state for temperature control purposes for more than 20% of the time with more than 2 interruptions per hour by the first active state.

In a similar way, in the present specification, the ON state of the heating unit 20 means it operates at more than 10 %, preferably more than 90%, of its maximum heating capacity. In the OFF state the heating unit 20 operates at less than 10 %, preferably at or about 0%, of its maximum heating capacity.

In certain embodiments, the compressor 6 and/or the heating unit 20 may only possess a fixed number of discrete operational states such as two, three or four etc. In other embodiments, the operational state of the compressor 6 and/or the heating unit 20 may be continuously variable between for example 0% (OFF) and the maximum capacity.

Currently, there exists no efficient means of controlling dehumidification capacity in refrigerated containers with an intermittently operated compressor.

It is to be understood that an intermittently operated compressor induces temperature variations, which induce relative humidity variations. Hence there is a need for better criteria for assessing a need for increased dehumidification (dehumidification need indicators) in relation to an intermittently operated compressor than simply observing that the current relative humidity is above a target relative humidity, as is otherwise done. All possible criteria within the spirit of assessing the need for increased dehumidification are within the scope of the invention.

Relative humidity in a refrigerated space, like a refrigerated transport container 1, may depend on the setpoint temperature, ambient conditions, amount of fresh air exchange, heat load, and/or moisture production by the cargo.

Moisture is typically removed by condensing on the evaporator 16 or frosting on the evaporator 16 and subsequent defrosting. Usually in refrigerated transport containers 1 without dehumidification, relative humidity (RH) will be higher than 90%. If a lower RH is required then humidity control is needed.

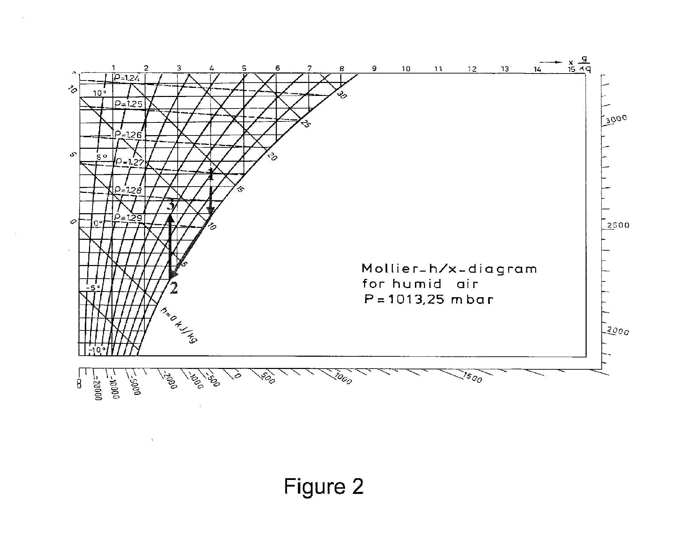

Figure 2 shows a Mollier diagram for humid air. It illustrates the relation between dry bulb temperature in °C (vertical axis), absolute humidity in g water vapour per kg air (horizontal ais on top of Figure 2) and relative humidity in %. Relative humidity is depicted by the curved lines, the right-most line presents saturated air at 100% RH, the one-but-right-most line presents 90% RH, and so on. Note that the term temperature, if not other specified, actually means dry bulb temperature. The dewpoint temperature of a volume of air is the temperature to which it must be reduced before condense starts to form. For any air condition in Figure 2 the dewpoint is assessed by moving vertically down to RH=100% curve. In Figure 2 the arrows from point 1 to 2 to 3 illustrate the dehumidification process taking place in cooling space 41.

In refrigeration transport containers 1, the principle of dehumidification is to first sub-cool the return air flow 50 at the evaporator 16 and subsequently reheat the air before it is supplied to the transport volume 45 again. In the example in Figure 2, a return air flow 50 at (temperature, RH) = (+3 °C, 85%) (point 1 in Figure 2) is first cooled at the evaporator 16 from point 2 to the dewpoint temperature of approximately +1 °C as illustrated by the vertical line down from point 1 in Figure 2.

Subsequent cooling, and thus dehumidification, proceeds (askew line towards point 2) till air leaves the evaporator 16 (point 2 in Figure 2). In that process, the absolute humidity of the air is reduced from about 4.0 to about 2.8 g/kg (horizontal axis at the top of Figure 2). Finally the heating unit 20 reheats the dehumidified air to point 3 in Figure 3 at (temperature, RH) = (+1 °C, 70%).

Figure 3 is a state diagram for temperature control with an intermittently operated compressor. Shown is a state diagram illustrating respective operational modes of a compressor (cooling), a heating unit and one or more evaporator fans as a function of a temperature error integral TEI. Here TEI is the integral over measured supply air temperature minus temperature setpoint. TEI is just one possible temperature-related parameter on which intermittent control of cooling and heating could be based.

The state diagram 200 of Figure 3 schematically illustrates how switching between control modes or states of cooling, heating, and/or air circulation within a refrigerated transport container may be performed as a function of TEI.

Arrow 202 points in direction of increasing values of TEI. The state or mode diagram 200 comprises a number of TEI thresholds or limits in-between individual control modes 204, 206, 208, 210, and 212. A first threshold, TEI_heat_stage_3_lim, constitutes a lower threshold where the heating unit is switched ON and the cooling is (maintained) OFF, i.e. the compressor is in the second less active state, if TEI falls below this threshold.

In the upper portion of the state diagram 200 in-between control modes 204 and 206, an additional threshold, TEI_max_cool, constitutes an upper threshold where the compressor is in the first active state while the heating unit is in an OFF state if TEI exceeds this upper threshold.

Three intermediate modes 206, 208, and 210, where the operational states of the compressor is the second less active state and the heating unit is OFF, are located in abutment in-between the upper control mode 204 (cooling) and the lowermost control mode 212 (heating via the heating unit). These three intermediate modes comprise two heating modes, control modes 208 and 210, and a circulation mode 206.

In the control modes 208 and 210, the heating unit resides in operational state OFF and the one or more evaporator fans are exploited to both supply heat to the supply air and add circulation to the air inside the transport volume.

In the control mode 208, the one or more evaporator fans are set in the LOW speed operational state while the speed of the one or more evaporator fans is set to HIGH speed in the control mode 210 reflecting a requirement for higher heat production due to the decreasing value of TEI.

In the circulation control mode 206, tightly controlling the internal air circulation, the evaporator fans may be switched between three different operational states having different fan speeds such as OFF, LOW and HIGH during circulation periods.

In the present specification, the term "circulation mode" means time periods where the operational state of the heating unit is OFF and the operational state of the compressor is in the second less active state.

Please note, the circulation mode 206 shown in Figure 3 illustrates control between three possible speeds of the one or more evaporator fans, while other fan speed control schemes may use two states (LOW and HIGH) during normal operation while yet other schemes may use more than three possible speeds.

As one example, the thresholds between the individual states 204, 206, 208, 210, and 212 may be:
TEI_max_cool = 90 °C*min,
TEI_heat_stage_1_lim = 0 °C*min,
TEI_heat_stage_2_lim = -10 °C*min,
TEI_heat_stage_3lim = -30 °C*min.

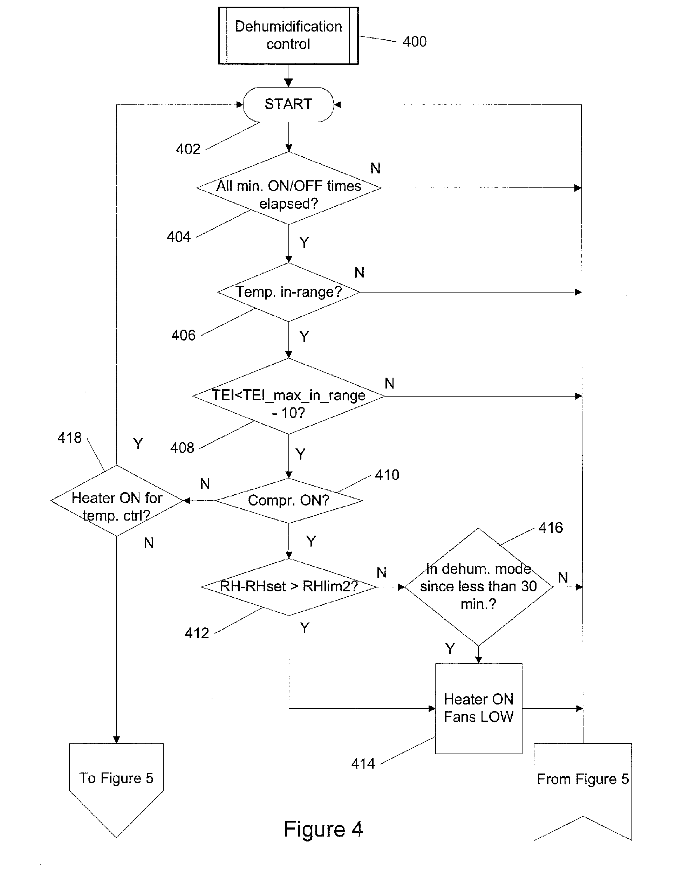

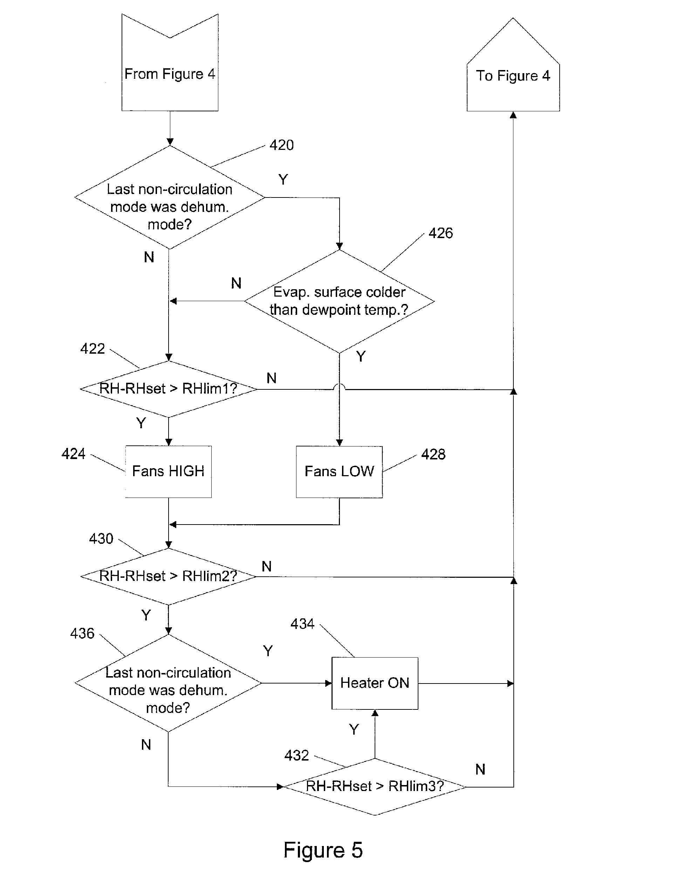

Figure 4 and Figure 5 is a flow chart illustrating steps executed by a microprocessor-implemented dehumidification control method or algorithm or program of a control system of a refrigerated transport container.

The flow chart shown in Figures 4 and 5 provides one example of the operation of a dehumidification control algorithm 400, including the operation of one or more evaporator fans (see e.g. 10 in Figure 1) and a heating unit (see e.g. 20 in Figure 1).

The algorithm starts in step 402 and proceeds to step 404 where it is tested whether all minimum duration times for being in a given state for the heating unit (20) and/or the compressor (6) and/or the evaporator fans (10) have elapsed, i.e. whether it should be allowed to change state of the various functional units like evaporator fans 10, heating unit 20, and/or compressor 6.

If the test in step 404 is no (N), the method proceeds back to the starting step 402, as no change of state is allowed.

If the test in step 404 is yes (Y), the method proceeds to step 406 where it is checked whether the temperature is in-range, i.e. sufficiently close to the temperature setpoint.

Testing whether the temperature is within spec or in-range may e.g. be done by testing whether the TEI is between certain predetermined minimum and maximum thresholds (TEI_min_in_range and TEI_max_in_range). Alternatively, the test can be whether the supply or return air flow temperature, or a function thereof, is within a predetermined temperature range adjacent to a setpoint temperature, where the function may also take into account the temperatures observed recently, e.g. during the last 30 minutes.

If test 406 is no, the method proceeds back to the starting step 402, thus giving priority to temperature control, as dehumidification might be at the expense of the needed temperature control. This ensures that dehumidification is performed only when the temperature is under adequate control. In refrigerated transport containers, adequate control of the temperature is normally the most important parameter.

If test 406 is yes, the method proceeds to step 408 where it is tested whether the temperature is below a certain measure or margin below the maximum in-range threshold (TEI_max_in_range). Dehumidification control may cause a rise in temperature, especially when nearly the maximum cooling capacity is needed to maintain temperature within the in-range region. Therefore starting dehumidification while temperature is just below the maximum in-range threshold is to be avoided. This may e.g. be done by testing whether the TEI is below the predetermined maximum in-range threshold (TEI_max_in_range) minus a predetermined margin, e.g. 10 °C*min.

If the test of step 408 is no, the method proceeds back to the starting step 402, as there is no temperature safety margin for performing dehumidification.

If the test of step 408 is yes, the method proceeds to step 410 where it is tested whether the compressor is ON, i.e. in the first active state (a condensation indicator). If the compressor is in the second less active state (i.e. the test in step 410 gives no), the method proceeds to step 418, which will be explained later. If the compressor is in the first active state, the method proceeds to step 412, where it is tested whether the difference between a current relative humidity RH and the relative humidity setpoint RHset (a dehumidification need indicator) is larger (or equal to or larger) than a predetermined second dehumidification need threshold or value (RHlim2). The second dehumidification need threshold may e.g. be + 3%. Other thresholds may be used in other embodiments. What is significant is that the second RH threshold is above the RH setpoint but to a small or lesser degree than a third RH threshold as explained later.

A current relative humidity RH may e.g. be obtained using a relative humidity sensor e.g. located in a return air flow (see e.g. 2 in Figure 1).

If the test of step 412 is yes then the relative humidity is above the RH setpoint by a certain degree (in the specific example by more than 3%) and the air is too humid and the method proceeds to step 414 where a dehumidification mode, i.e. an operation where dehumidification is performed in one way or another, is entered or maintained. Entering dehumidification mode includes for example that the heating unit is turned ON and the speed of the one or more evaporator fans is set to or maintained at LOW to perform dehumidification. Both heating and fan speed reduction have an advantageous effect in relation to performing dehumidification, as explained earlier. Other ways of performing dehumidification may be contemplated, e.g. by decreasing the heat absorbing area of the evaporator by physically shutting off a part of a split evaporator or by increasing the so-called superheat. Increasing the superheat fills a larger share of the evaporator tubes with gas, thus effectively leaving a smaller part of the evaporator for heat absorption. After step 414, the method proceeds to the starting step 402.

If the test of step 412 is no, the method proceeds to step 416 where it is tested whether the method has been in a dehumidification mode for less than a predetermined period of time, e.g. 30 minutes (a dehumidification need indicator). If yes, the method proceeds to step 414 where a dehumidification mode is then maintained. This is to ensure that if a dehumidification mode is or has been active within a certain period of time it is not abandoned too soon and thereby can have its full or a larger effect even though the test of step 412 in the mean time has become no, i.e. the difference between the current relative humidity RH and the relative humidity setpoint RHset has become less (or equal to or less) than the predetermined second dehumidification need threshold threshold (RHlim2).

If the test in step 416 is no, i.e. the method has been in dehumidification mode for more than 30 minutes, and temperature control has still requested compressor ON as assessed in step 410, then the dehumidification control method leaves the control of fan speed and heating unit to the temperature controller and proceeds to the starting step 402.

Reverting back to step 410 in the case of no, the method proceeds to step 418 where it is tested whether the heating unit is ON for temperature control purposes. The test may e.g. be made by checking whether the heating unit is ON and TEI<TEI_heat_stage3_lim (Figure 3). If yes, the control of fan speed and heating unit is left to the temperature controller and the dehumidification control method proceeds back to the starting step 402. If no, the method proceeds to step 420 (in Figure 5) where it is tested whether the last non-circulation mode was a dehumidification mode (a dehumidification need indicator).

If the test in step 420 is yes, extra dehumidification may be welcome and the method proceeds to step 426, which will be explained later.

If the test in step 420 is no, the method proceeds to step 422, where it is tested whether the difference between a current relative humidity RH and the relative humidity setpoint RHset (a dehumidification need indicator) is larger (or equal to or larger) than a predetermined first dehumidification need threshold or value (RHlim1). The first RH threshold may e.g. be minus 2%. Other thresholds may be used in other embodiments. What is significant is that the first RH threshold is below the second RH threshold.

If the test in step 422 is no, the relative humidity is distinctly lower than requested and dehumidification is not to be performed and the method proceeds to the starting step 402 without changing any states for dehumidification purposes.

If the test in step 422 is yes, the method proceeds to step 424, where the fan speed of the one or more evaporator fans is set to or maintained at HIGH before proceeding to step 430. Setting or maintaining fan speed at HIGH will generate heat that will evoke an earlier need to transition the compressor state to its first active state and therefore earlier dehumidification.

Reverting back to step 420 in the case of yes, the method proceeds to step 426 where it is tested whether the evaporator surface is colder than dewpoint temperature (a condensation indicator). If yes, the method proceeds to step 428 setting or maintaining the fan speed of the of the one or more evaporator fans at LOW before proceeding to step 430. In the first period after a compressor abandoning the first active state the evaporator surface temperature may still be below dewpoint and condensation or deposition on the evaporator might continue and it may be possible to exploit this for dehumidification. The steps 426 and 428 enable taking advantage of this by setting the fan speed to LOW.

The dewpoint temperature may e.g. be derived via a relative humidity sensor (see e.g. 2 in Figure 1) and a temperature sensor (see e.g. 5 in Figure 1) located in the return air flow (see e.g. 50 in Figure 1), and the evaporator surface temperature may be measured using for example a defrost termination temperature sensor (see e.g. 17 in Figure 1). Evaporator surface temperature colder than dewpoint temperature might also be assumed based on other indicators, for example: when supply air temperature is below return air temperature then apparently the evaporator is colder than the return air flow and it may be assumed that its surface temperature then is below dewpoint temperature.

If the test of 426 is no, signifying that the temperature of the evaporator surface cannot be used for dehumidification purposes, the method proceeds to step 422 (explained already).

In step 430, regardless of whether the method arrived from step 424 or 428, it is tested whether the difference between a current relative humidity RH and the relative humidity setpoint RHset (a dehumidification need indicator) is larger (or equal to or larger) than the predetermined second dehumidification need threshold or value (RHlim2). This step corresponds to step 412.

If the test in step 430 is no, the method proceeds to the starting step 402 with the result that the fan speed of the of the one or more evaporator fans has been set to HIGH (in step 424) or to LOW (in step 428), and the heating unit remains OFF.

If the result of the test in step 430 is yes, the method proceeds to step 436 where it is tested whether the last non-circulation mode was a dehumidification mode (a dehumidification need indicator). The test in step 436 corresponds to the test in step 420. Again, if the test in step 436 is yes, extra dehumidification may be welcome and the method proceeds to step 434 turning the heating unit ON, after which the method proceeds to the starting step 402. The reason for making the test again is that step 430 may be entered from both the yes and the no branch of step 420. It is to be understood that the test need not actually be made again but the result of the test in step 420 may be stored.

If the test in step 436 is no, the method proceeds to step 432 where it is tested whether the difference between a current relative humidity RH and the relative humidity setpoint RHset (a dehumidification need indicator) is larger (or equal to or larger) than a predetermined third dehumidification need threshold or value (RHlim3). The third RH threshold may e.g. be + 15%. Other thresholds may be used in other embodiments. What is significant is that the third RH threshold is larger than the second RH threshold.

If the test in step 432 is yes, signifying that the air is far more humid than requested, the method proceeds to step 434 where the heating unit is turned ON before proceeding to the starting step 402. Turning the heating unit ON while the compressor is in the second less active state raises temperature rapidly and hence advances the moment the compressor transitions to the first active state and hence enforces an earlier possibility to re-enter dehumidification mode (compressor in first active state, heating unit ON, fan speed LOW).

If the test in step 432 is no, the method proceeds to the starting step 402 with the result that the fan speed of the of the one or more evaporator fans has been set to HIGH (in step 424) or to LOW (in step 428) and that the heating unit remains OFF.

## Claims

1. A method of dehumidification control in a refrigerated transport container (1), the refrigerated transport container (1) comprising at least one heating unit (20), a transport volume (45), a cooling unit (40), and a control unit, wherein the cooling unit (40) comprises at least a compressor (6) and an evaporator (16) comprising one or more evaporator fans (10), the heating unit (20) is situated downstream of the evaporator (16), where the compressor (6) is intermittently operated between a first active state and a second less active state, wherein the method comprises:
- controlling the operation of the one or more evaporator fans (10) for dehumidification purposes according to
o if a need for dehumidification is determined using at least one dehumidification need indicator and if at least one condensation indicator indicates that the evaporator (16) is sufficiently cold for condensation or deposition of water vapour on its external surface, then setting or maintaining the speed of the one or more evaporator fans (10) to a reduced speed (LOW) in order to increase a condensation or deposition rate, and/or
o if a need for dehumidification is determined using at least one dehumidification need indicator and if at least one condensation indicator indicates that the evaporator (16) is too warm for condensation or deposition of water vapour on its external surface, then setting or maintaining the speed of the one or more evaporator fans (10) to an increased speed (HIGH) in order to increase heat load to the evaporator (16).

2. The method according to claim 1, wherein the at least one dehumidification need indicator is one or more selected from the group of:
- a difference between current or recent relative humidity (RH) and relative humidity setpoint (RHset), or a function thereof,
- a time elapsed since a most recent start of operating in dehumidification mode, and
- that the evaporator fans (10) were operating at a reduced speed (LOW) the last time the compressor (6) was in the first active state.

3. The method according to claim 1 or 2, wherein the at least one condensation indicator is one or more selected from the group of:
- that the compressor is in the first active state,
- that a supply air temperature is colder than a return air temperature,
- that the supply air temperature is colder than a setpoint temperature,
- a measured temperature of at least a part of an external surface of the evaporator (16) is below dewpoint, and
- a function of a boiling temperature of the refrigerant inside the evaporator is below dewpoint.

4. The method according to any one of claims 1-3, wherein the method comprises the step of
- controlling the operation of the one or more evaporator fans (10) for dehumidification purposes by setting or maintaining the speed of the one or more evaporator fans (10) to be a reduced speed (LOW) thereby increasing condensation or deposition if:
o the compressor (6) is in the second less active state, the evaporator fans (10) were operating at a reduced speed (LOW) the last time the compressor (6) was in the first active state, and a supply air temperature is colder than a return air temperature, and/or,
o the compressor (6) is in the first active state and the difference between current relative humidity (RH) and relative humidity setpoint (RHset) is determined to be above a second predetermined dehumidification need threshold (RHlim2), and/or
o the compressor (6) is in the first active state, a time elapsed since a most recent start of operating in dehumidification mode is less than a predetermined period of time.

5. The method according to any one of claims 1―4, wherein the method comprises the step of
- controlling the operation of the one or more evaporator fans (10) for dehumidification purposes by setting or maintaining the speed of the one or more evaporator fans (10) to be an increased speed (HIGH) thereby increasing heat load to the evaporator if:
o the compressor (6) is in the second less active state and if the difference between current relative humidity (RH) and relative humidity setpoint (RHset) is above a first predetermined dehumidification need threshold (RHlim1) and if at least one condensation indicator indicates that the evaporator (16) is too warm for condensation or deposition of water vapour on its external surface.

6. The method according to any one of claims 1―5, wherein the method comprises controlling the operation of the heating unit (20) for dehumidification purposes by activating the heating unit (20) thereby increasing heat load to the evaporator (16) when a need for dehumidification is determined using at least one dehumidification need indicator.

7. The method according to claim 6, wherein the heating unit (20) is activated if:
- the compressor (6) is in the first active state and the difference between current relative humidity (RH) and relative humidity setpoint (RHset) is determined to be above the second predetermined dehumidification need threshold (RHlim2), and/or
- the compressor (6) is in the first active state, and a time elapsed since a most recent start of operating in dehumidification mode is less than a predetermined period of time, and/or
- the compressor (6) is in the second less active state, the heating unit was active at the end of a last period the compressor (6) was in the first active state and the difference between current relative humidity (RH) and relative humidity setpoint (RHset) is determined to be above the second predetermined dehumidification need threshold (RHlim2), and/or
- the compressor (6) is in the second less active state, and the difference between current relative humidity (RH) and relative humidity setpoint (RHset) is determined to be above a third predetermined dehumidification need threshold (RHlim3).

8. A system for dehumidification in a refrigerated transport container (1), the refrigerated transport container (1) comprising at least one heating unit (20), a transport volume (45), a cooling unit (40), and a control unit, wherein the cooling unit (40) comprises at least a compressor (6) and an evaporator (16) comprising one or more evaporator fans (10), the heating unit (20) is situated downstream of the evaporator (16), where the compressor (6) is intermittently operated between a first active state and a second less active state, wherein the system comprises a processing unit adapted to:
- control the operation of the one or more evaporator fans (10) for dehumidification purposes according to
o if a need for dehumidification is determined using at least one dehumidification need indicator and if at least one condensation indicator indicates that the evaporator (16) is sufficiently cold for condensation or deposition of water vapour on its external surface, then setting or maintaining the speed of the one or more evaporator fans (10) to a reduced speed (LOW) in order to increase a condensation or deposition rate, and/or
o if a need for dehumidification is determined using at least one dehumidification need indicator and if at least one condensation indicator indicates that the evaporator (16) is too warm for condensation or deposition of water vapour on its external surface, then setting or maintaining the speed of the one or more evaporator fans (10) to an increased speed (HIGH) in order to increase heat load to the evaporator (16).

9. The system according to claim 8, wherein the at least one dehumidification need indicator is one or more selected from the group of:
- a difference between current or recent relative humidity (RH) and relative humidity setpoint (RHset), or a function thereof,
- a time elapsed since a most recent start of operating in dehumidification mode, and
- that the evaporator fans (10) were operating at a reduced speed (LOW) the last time the compressor (6) was in the first active state.

10. The system according to claim 8 or 9, wherein the at least one condensation indicator is one or more selected from the group of:
- that the compressor is in the first active state,
- that a supply air temperature is colder than a return air temperature,
- that the supply air temperature is colder than a setpoint temperature,
- a measured temperature of at least a part of an external surface of the evaporator (16) is below dewpoint, and
- a function of a boiling temperature of the refrigerant inside the evaporator is below dewpoint.

11. The system according to any one of claims 8-10, wherein the processing unit is adapted to
- control the operation of the one or more evaporator fans (10) for dehumidification purposes by setting or maintaining the speed of the one or more evaporator fans (10) to be a reduced speed (LOW) thereby increasing condensation or deposition if:
o the compressor (6) is in the second less active state, the evaporator fans (10) were operating at a reduced speed (LOW) the last time the compressor (6) was in the first active state, and a supply air temperature is colder than a return air temperature, and/or,
o the compressor (6) is in the first active state and the difference between current relative humidity (RH) and relative humidity setpoint (RHset) is determined to be above a second predetermined dehumidification need threshold (RHlim2), and/or
o the compressor (6) is in the first active state, a time elapsed since a most recent start of operating in dehumidification mode is less than a predetermined period of time.

12. The system according to any one of claims 8―11, wherein the processing unit is adapted to
- control the operation of the one or more evaporator fans (10) for dehumidification purposes by setting or maintaining the speed of the one or more evaporator fans (10) to be an increased speed (HIGH) thereby increasing heat load to the evaporator if:
o the compressor (6) is in the second less active state and if the difference between current relative humidity (RH) and relative humidity setpoint (RHset) is above a first predetermined dehumidification need threshold (RHlim1) and if at least one condensation indicator indicates that the evaporator (16) is too warm for condensation or deposition of water vapour on its external surface.

13. The system according to any one of claims 8―12, wherein the processing unit is adapted to control the operation of the heating unit (20) for dehumidification purposes by activating the heating unit (20) thereby increasing heat load to the evaporator (16) when a need for dehumidification is determined using at least one dehumidification need indicator.

14. The system according to claim 13, wherein the heating unit (20) is activated if:
- the compressor (6) is in the first active state and the difference between current relative humidity (RH) and relative humidity setpoint (RHset) is determined to be above the second predetermined dehumidification need threshold (RHlim2), and/or
- the compressor (6) is in the first active state, and a time elapsed since a most recent start of operating at increased condensation or deposition rate is less than a predetermined period of time, and/or
- the compressor (6) is in the second less active state, the heating unit was active at the end of a last period the compressor (6) was in the first active state and the difference between current relative humidity (RH) and relative humidity setpoint (RHset) is determined to be above the second predetermined dehumidification need threshold (RHlim2), and/or
- the compressor (6) is in the second less active state, and the difference between current relative humidity (RH) and relative humidity setpoint (RHset) is determined to be above a third predetermined dehumidification need threshold (RHlim3).

15. A system according to any one of claims 8―14, wherein the refrigerated transport container is not a transport container but another type of refrigerated space in connection with a refrigeration unit.
